# FASCICULE DE BREVET EUROPEEN

(11) **EP 4 427 291 B1**
(45) Date de publication et mention de la délivrance du brevet: **18.03.2026**
(21) Numéro de dépôt: 24702859.0
(22) Date de dépôt: 26.01.2024
(51) Int. Cl.: H01M 50/211, B60L 50/64, H01M 50/244, H01M 50/249, H01M 50/262

(54) **MODULE ÉLECTRIQUE POUR BATTERIE ÉLECTRIQUE**
ELEKTRISCHES MODUL FÜR EINE ELEKTRISCHE BATTERIE
ELECTRIC MODULE FOR AN ELECTRIC BATTERY

(30) Priorité: 27.01.2023 FR 2300810
(43) Date de publication de la demande: 11.09.2024
(73) Titulaire: Verkor, 38000 Grenoble (FR)
(72) Inventeur: MARES-MANTON, Jordan, 38000 Grenoble (FR)
(74) Mandataire: Novagraaf Group
(86) Numéro de dépôt international: PCT/IB2024/050758
(87) Numéro de publication internationale: WO 2024/157223

(56) Documents cités:
- EP-A1- 3 264 496
- WO-A1-2018/105957
- DE-U1- 202019 107 287

## Description

### Domaine technique de l'invention

L'invention concerne le domaine des batteries électriques pour véhicule automobile électrique. En particulier l'invention concerne des batteries électriques. De façon plus précise, l'invention concerne des batteries électriques munies de modules comprenant des cellules électrochimiques lithium-ion du type « pouch », c'est-à-dire des cellules en sachet.

### Arrière-plan technique

La batterie électrique destinée à équiper des véhicules électriques comportant plusieurs modules électriques, eux-mêmes comprenant de nombreuses cellules électriques.

Les modules sont assemblés en connectant entre elles des cellules électriques. Les connexions peuvent être du type, en série et/ou du type en parallèle en fonction des besoins du constructeur automobile.

Les batteries électriques actuelles comprennent un bâti définissant une zone d'accueil des modules.

La zone d'accueil est maillée de plusieurs parois transversales et/ou longitudinales. Ces parois définissent des logements unitaires pour l'accueil d'un module.

Les parois se présentent sous la forme de profilés, rapportés et assemblés sur le bâti.

Les parois peuvent avoir plusieurs fonctions. Outre définir des logements unitaires, elles permettent de conférer tenu mécaniques à la batterie qui à son tour peut conférer de la rigidité structurelle au châssis du véhicule. Les parois peuvent aussi servir de guides à la connectique et/ou de système de refroidissement notamment en intégrant des canaux transportant un fluide caloporteur.

Bien que ces batteries aient donné satisfaction jusqu'à aujourd'hui, elles demeurent perfectibles. Il peut être cité à titre d'exemple, les documents DE 20 2019 107287U, WO2018/105957A1, EP3264496A1.

En effet, la démocratisation du marché des véhicules électriques implique une production toujours plus importante de batteries électriques. Les batteries électriques précédemment décrites donnent satisfaction lorsqu'il est question de petites quantités. Ces batteries électriques ne se prêtent pas ou peu à une production en grande quantité.

Il existe un risque avéré que les usines de production de batteries électriques ne soient pas en mesure de produire les quantités demandées par l'industrie automobile.

Un autre inconvénient des batteries actuelles réside dans leur volume et leur masse.

Il existe donc un besoin d'améliorer l'architecture des batteries électriques.

L'invention vise à résoudre les problèmes précités.

### Résumé de l'invention

A cet effet, il est proposé en premier lieu une batterie secondaire comprenant :
- un bâti comportant un premier support latéral et un deuxième support latéral définissant entre eux une zone d'accueil,
- une pluralité de modules agencés dans la zone d'accueil, chaque module ayant une première armature et une deuxième armature, batterie dans laquelle la première armature et la deuxième armature s'étendent du premier support latéral jusqu'au deuxième support latéral et dans laquelle la première armature et la deuxième armature sont chacune fixées au premier support latéral et au deuxième support latéral, batterie dans laquelle, à l'intérieur d'un module donné, les cellules sont connectées électriquement entre elles au moyen de dispositifs de connexion rigides, la première armature et la deuxième armature étant fixées aux dispositifs de connexion. .

Cette architecture permet de simplifier le montage de la batterie électrique. En particulier, cette architecture permet de s'affranchir des parois longitudinales et transversales précédemment évoquées. L'assemblage est donc simplifié et ce faisant accéléré permettant ainsi un meilleur rendement de la production de batteries électriques. De plus, en s'affranchissant des parois longitudinales et transversales, la masse de la batterie est réduite et le volume alloué aux cellules est augmenté. Ainsi les performances globales de la batterie sont améliorées. En outre, en s'affranchissant des parois longitudinales et transversales, le coût de la batterie est réduit par économie de matière. En fixant les dispositifs de connexion à la première armature et à la deuxième armature, la rigidité mécanique de la batterie est améliorée. En effet, les dispositifs de connexion ainsi fixés aux armatures confèrent aux modules une bonne rigidité mécanique, ce qui en conséquence confère une meilleure rigidité mécanique à la batterie compte tenu de la fixation des armatures aux supports latéraux. Les cellules sont ainsi mieux protégées en cas de choc extérieur tel qu'un accident. De plus, l'utilisation des dispositifs de connexion comme éléments de rigidification permet de simplifier l'architecture en évitant d'ajouter des éléments supplémentaires telles que des tiges de rigidification susceptibles d'alourdir et complexifier l'assemblage et réduisant l'espace utile pour les cellules au détriment de la capacité globale de la batterie. Avantageusement, la rigidité mécanique du châssis du véhicule est aussi améliorée.

Diverses caractéristiques supplémentaires peuvent être prévues seules ou en combinaison :
- deux modules immédiatement voisins sont en contact l'un avec l'autre ou sont espacés l'un de l'autre par un espace de séparation, ledit espace de séparation étant vide ;
- le premier support latéral et le deuxième support latéral s'étendent selon un axe longitudinal et les armatures s'étendent selon un premier axe transversal perpendiculaire à l'axe longitudinal ;
- les armatures sont des profilés ayant une section en forme de C ;
- chaque armature présente en section une paroi centrale s'étendant selon un deuxième axe transversal perpendiculaire à l'axe longitudinal et au premier axe transversal, deux parois latérales s'étendant selon l'axe longitudinal et définissant un angle sensiblement droit avec la paroi centrale, et deux parois d'extrémité chacune prolongeant une paroi latérale, lesdites parois d'extrémités étant orientées en direction l'une de l'autre ;
- chaque armature comporte à chacune d'extrémités une platine de fixation destinée à être solidarisée aux supports latéraux ;
- chaque armature comprend deux platines de fixation, une seule platine de fixation à chacune des extrémités ;
- sur chaque armature, les platines de fixation prolongent, selon le premier axe transversal, une seule et même paroi latérale ;
- la platine de fixation fait saillie du profilé selon le premier axe transversal ;
- chaque module comprend plusieurs paires de cellules électrochimiques secondaires en sachet ;
- les paires de cellules sont agencées les unes à côté des autres selon l'axe longitudinal ;
- chaque paire comporte deux cellules électrochimiques en sachet, lesdites cellules d'une même paire s'étendant selon le premier axe transversal dans le prolongement l'une de l'autre ;
- la première armature et la deuxième armature sont chacune fabriquées d'un seul tenant ;
- la batterie comprend des armatures d'extrémité agencées sensiblement perpendiculaires aux premier support latéral et deuxième support latéral, les armature d'extrémité fermant la zone d'accueil longitudinalement ;
- les armatures d'extrémités sont identiques à la première armature et la deuxième armature ;
- la première armature et la deuxième armature sont chacune continues ;
- chaque module comprend un dispositif de connexion apte à connecter électriquement, les cellules d'une même paire ou des cellules de paires différentes, ledit dispositif de connexion étant agencé entre les cellules selon le premier axe transversal ;
- chaque module comprend un dispositif de connexion apte à connecter électriquement, au moins deux cellules de paires différentes du côté du premier support latéral ;
- chaque module comprend un dispositif de connexion apte à connecter électriquement, au moins deux cellules de paires différentes du côté du deuxième support latéral,
- les dispositifs de connexion sont rigides..

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig 1] la figure 1 est une vue en perspective d'un véhicule automobile électrique comprenant une batterie électrique selon l'invention ;
[Fig 2] la figure 2 est une vue en perspective d'une batterie électrique selon l'invention ;

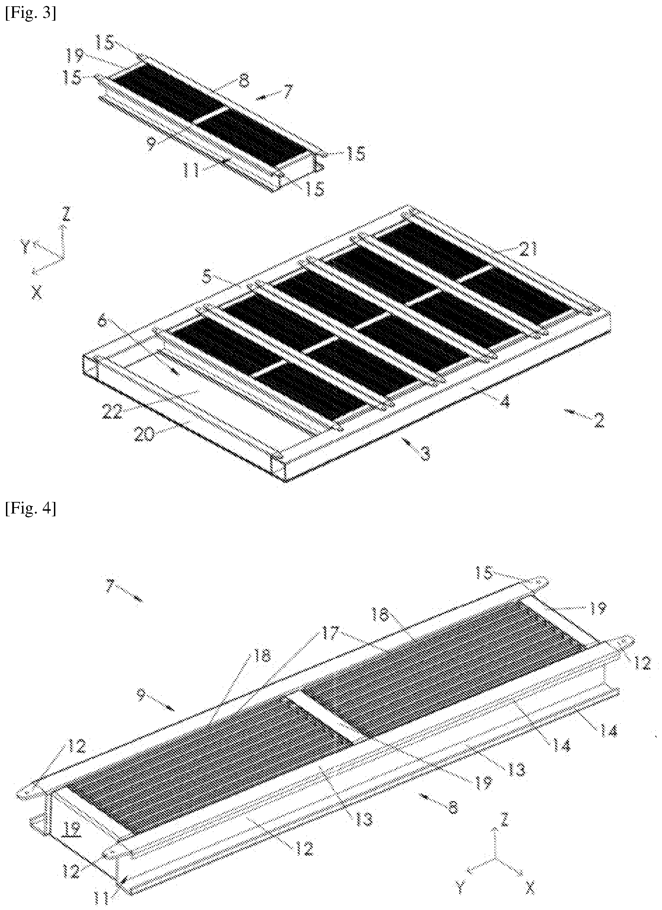

[Fig 3] la figure 3 est une autre vue en perspective de la batterie électrique de la figure 2 ;
[Fig 4] la figure 4 est une vue en perspective d'un module électrique de la batterie électrique des figures 2 et 3.

### Description détaillée de l'invention

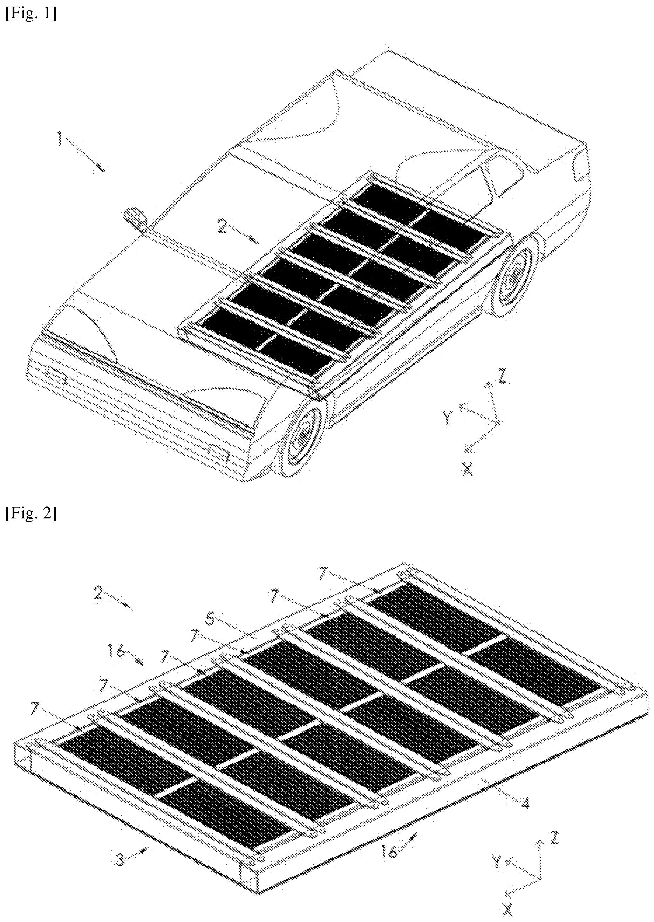

Sur la figure 1 est représenté un véhicule 1 automobile électrique comprenant une batterie 2 électrique secondaire. Une batterie électrique secondaire est une batterie électrique rechargeable. La batterie 2 électrique est agencée sur le châssis du véhicule 1 automobile.

Dans la suite de la description, on adoptera de manière non limitative - et sans référence à la gravité terrestre - des orientations longitudinale, transversale et verticale, indiquées par le trièdre X, Y, Z des figures et dans lesquels :
- l'axe X correspond à un premier axe longitudinal,
- l'axe Y, perpendiculaire à l'axe X, correspond à un premier axe transversal,
- l'axe Z, perpendiculaire à l'axe X et à l'axe Y, correspond à un deuxième axe transversal.

Le trièdre XYZ définit les plans XY, XZ et YZ.

Ainsi qu'on peut le voir sur les dessins, la batterie 2 comprend un bâti 3 comportant un premier support 4 latéral et un deuxième support 5 latéral. Le premier support 4 latéral et le deuxième support 5 latéral définissent, entre eux, une zone 6 d'accueil. Il est entendu que la zone 6 d'accueil fait référence uniquement à une zone destinée à accueillir des modules 7 électriques. La zone 6 d'accueil ne fait pas référence à une quelconque autre zone non destinée ou n'accueillant pas des modules 7 électriques.

La batterie 2 comprend plusieurs modules 7. Les modules 7 sont agencés dans la zone 6 d'accueil.

Chaque module 7 comporte une première armature 8 et une deuxième armature 9.

La première armature 8 et la deuxième armature 9 s'étendent chacune du premier support 4 latéral jusqu'au deuxième support 5 latéral.

La première armature 8 est fixée d'une part au premier support 4 latéral et d'autre part au deuxième support 5 latéral. La deuxième armature 9 est fixée d'une part au premier support 4 latéral et d'autre part au deuxième support 5 latéral.

Ainsi, chaque module 7 s'étend transversalement selon l'axe Y depuis le premier support 4 latéral jusqu'au deuxième support 5 latéral.

Cette architecture permet de simplifier le montage de la batterie 1 électrique. En particulier, cette architecture permet de s'affranchir des parois longitudinales et transversales précédemment évoquées. L'assemblage est donc simplifié et ce faisant accéléré permettant ainsi un meilleur rendement de la production de batteries 1 électriques. De plus, en s'affranchissant des parois longitudinales et transversales, la masse de la batterie est réduite et le volume alloué aux cellules est augmenté. Les performances globales de la batterie sont améliorées. En outre, en s'affranchissant des parois longitudinales et transversales, le coût de la batterie est réduit par économie de matière.

Avantageusement, deux modules 7 immédiatement voisins, sont en contact l'un de l'autre. Plus précisément les armatures 8,9 de deux modules 7 immédiatement voisins sont en contact l'une de l'autre. En variante, deux modules 7 immédiatement voisins peuvent être espacés d'un espace de séparation. L'espace de séparation est vide.

Dans l'une ou l'autre de ces architectures, et étant donné que les modules 7 s'étendent selon l'axe Y du premier support 4 latéral au deuxième support 5 latéral, la zone 6 d'accueil est nécessairement vide, c'est-à-dire dénuée d'une quelconque paroi latérale ou longitudinale.

Avantageusement, la première armature 8 et la deuxième armature 9 sont fabriquées d'un seul tenant. En d'autres termes, la première armature 8 et la deuxième armature 9 se présentent chacune sous la forme d'une seule pièce.

Ainsi l'assemblage de la batterie 1 électrique est simplifié. De cette façon, il devient possible de s'affranchir des parois longitudinales et transversales permettant d'obtenir de meilleures performances globales de la batterie.

Avantageusement, la première armature 8 et la deuxième armature 9 sont chacune continues. Par « continue » on entend que les armatures 8, 9 ne comprennent pas d'orifices dont les dimensions sont destinées ou susceptibles de permettre le passage de connectiques ou d'autres éléments fonctionnels. En effets, ces orifices, généralement dont une dimension est de l'ordre de quelques centimètres, sont susceptibles de fragiliser la structure mécanique des armatures 8,9 et donc de la batterie 2.

Avantageusement, le premier support 4 latéral et le deuxième support 5 latéral s'étendent selon l'axe X. La première armature 8 et la deuxième armature 9 s'étendent selon l'axe Y.

Avantageusement, la première armature 8 et la deuxième armature 9 sont des profilés ayant une section, dans le plan XZ, en forme de C.

Ainsi la première armature 8 et la deuxième armature 9 comportent une zone 11 intérieure débouchant sur l'extérieur. Un tel profilé présente plusieurs avantages dont sa légèreté et sa tenue mécanique, qu'il confère au bâti de la batterie 1 électrique. Un autre avantage réside dans le fait que la zone 11 intérieur peut servir de guide pour le passage de fils électriques, de connectiques et/ou de systèmes de refroidissement.

Avantageusement, chaque première et deuxième armature 8, 9 de module 7 comprend en section, dans le plan XZ, une paroi 12 centrale qui s'étend selon l'axe Z. Les première et deuxième armatures 8, 9 comportent deux parois 13 latérales prolongeant la paroi 12 centrale selon l'axe X. Les parois 13 latérales définissent un angle sensiblement droit avec la paroi 12 centrale.

Avantageusement, les première et deuxième armatures 8, 9 comportent deux parois 14 d'extrémités prolongeant les parois 13 latérales selon l'axe Z. Les parois 13 latérales sont orientées en direction l'une de l'autre.

Un profilé présentant ces caractéristiques s'avère être particulièrement avantageux en ce qu'il confère tenue mécanique au bâti 3 et légèreté à la batterie 1 électrique. Ceci permet d'améliorer le rendement global ainsi que la tenue mécanique du châssis.

Avantageusement, les première et deuxième armatures 8, 9 sont munies à chacune d'extrémités 16, d'une platine 15 de fixation. La platine 15 de fixation est destinée à être solidarisée aux supports 4, 5 latéraux.

Ces platines 15 de fixation permettent de solidariser les modules 7 aux supports latéraux.

Avantageusement, chaque armature 8, 9 comprend deux platines 15 de fixation. A chacune des extrémités 16, les armatures 8, 9 comprennent une seule platine 15 de fixation.

Avec une seule platine 15 de fixation à chaque extrémité 16, l'insertion entre les supports 4, 5 latéraux est facilitée et l'assemblage de la batterie 2 électrique accéléré.

Avantageusement, sur chaque première et deuxième armature 8, 9, les platines 15 de fixation prolongent, selon l'axe Y, une seule et même paroi 13 latérale. En d'autres termes, et ainsi qu'on peut le voir sur les dessins, les platine 15 de fixation sont situées sur la même paroi 13 latérale, l'autre paroi 13 latérale opposée étant dépourvue de platine 15 de fixation.

Une telle architecture présente l'avantage de faciliter l'introduction des modules 7 dans la zone 6 d'accueil. Ceci permet d'accélérer l'assemblage de la batterie 2 électrique.

Avantageusement, les platines 15 de fixation font saillie du profilé selon l'axe Y.

De cette façon, les platines 15 de fixation peuvent venir en appui sur les supports 4, 5 latéraux afin d'obtenir une fixation robuste.

Avantageusement, chaque module 7 comprend plusieurs paires 17 de cellules 18 électrochimiques secondaires. Les cellules 18 sont du type en sachet. Elles sont mieux connues en langue anglaise par les termes *« pouch cells ».*

Ces cellules 18 sont particulièrement avantageuses en ce qu'elles présentent une longueur suffisamment importante selon l'axe Y pour réduire au possible le nombre de cellules 18. Dans le cas d'espèce, on peut voir que seules deux cellules 18 du type en sachet, côte à côte, s'étendent sensiblement du premier support 4 latéral jusqu'au deuxième support 5 latéral.

Avantageusement, chaque paire 17 comporte deux cellules 18 en sachet. Les cellules 18 d'une même paire s'étendent selon l'axe Y dans le prolongement l'une de l'autre.

Ceci permet de réduire le nombre de cellules 18 dans chaque module réduisant de ce fait le coût environnemental et financier de la batterie 2 électrique.

Avantageusement les paires 17 de cellules sont agencées les unes à côté des autres, selon l'axe X, depuis la première armature 8 jusqu'à la deuxième armature 9.

A l'intérieur d'un module 7 donné, les cellules 18 sont connectées entre elles au moyen de dispositifs 19 de connexion. La première armature 8 et la deuxième armature 9 sont fixées aux dispositifs 19 de connexion. De façon non limitative, cette fixation est réalisée au moyen de vis ou par soudure.

En fixant les dispositifs 19 de connexion à la première armature 8 et à la deuxième armature 9, la rigidité mécanique de la batterie 2 est améliorée. En effet, les dispositifs 19 de connexion ainsi fixés aux armatures 8,9 confèrent aux modules 7 une bonne rigidité mécanique, ce qui en conséquence confère une meilleure rigidité mécanique à la batterie 32 compte tenu de la fixation des armatures 8,9 aux supports latéraux 4,5. Les cellules 19 sont ainsi mieux protégées en cas de choc extérieur tel qu'un accident. De plus, l'utilisation des dispositifs de connexion comme éléments de rigidification permet de simplifier l'architecture en évitant d'ajouter des éléments supplémentaires telles que des tiges de rigidification susceptibles d'alourdir et complexifier l'assemblage et réduisant l'espace utile pour les cellules au détriment de la capacité globale de la batterie.Avantageusement, la rigidité mécanique du châssis du véhicule est aussi améliorée.

Avantageusement, chaque module 7 comprend un dispositif 19 de connexion agencé entre les cellules selon le premier axe Y transversal. Ce dispositif 19 de connexion permet de connecter ensemble les cellules d'une même paire 17 ou les cellules de paires 17 différentes en fonction des besoins.

Avantageusement, chaque module 7 comprend un dispositif 19 de connexion situé du côté du premier support 4 latéral. Ce dispositif 19 de connexion (situé du côté du premier support 4 latéral permet de connecter électriquement au moins deux cellules de paires 17 différentes, ledit dispositif 19 de connexion se situe ainsi à une extrémité des cellules 18.

Avantageusement, chaque module 7 comprend un dispositif 19 de connexion situé du côté du deuxième support 5 latéral. Ce dispositif 19 de connexion (situé du côté du deuxième support 5 latéral permet de connecter électriquement au moins deux cellules de paires 17 différentes, ledit dispositif 19 de connexion se situe ainsi à une extrémité des cellules 18.

Les dispositif 19 de connexion ainsi agencés permettent d'améliorer la rigidité structurelle de la batterie 2.

Avantageusement, les dispositifs 19 de connexion sont rigides. Ceci permet d'améliorer la rigidité structurelle des modules et donc de la batterie.

La première armature 8 et la deuxième armature 9 peuvent être fixées par des vis ou par soudure aux premier support 4 latéral et deuxième support 5 latérale.

Avantageusement, la batterie 2 électrique comprend une première armature 20 d'extrémité et une deuxième armature 21 d'extrémité agencées l'une et l'autre respectivement d'un bout à l'autre du bâti 3 selon l'axe X. Les armatures 20, 21 d'extrémités sont identiques à la première armature 8 et à la deuxième armature 9.

Les armatures 20, 21 d'extrémités permettent de fermer selon l'axe X, la zone 6 d'accueil et de définir la distance entre le premier support latéral 4 et le deuxième support 5 latéral selon l'axe Y afin de faciliter l'insertion des modules 7 dans la zone 6 d'accueil.

Avantageusement, la batterie 2 électrique comprend un couvercle 22 inférieur et un couvercle supérieur, ce dernier n'étant pas représenté sur les dessins. Les couvercles sont fixés au premier support 4 latéral, au deuxième support 5 latéral et aux première et deuxième armatures 20, 21 d'extrémités.

## Revendications

1. Batterie (2) secondaire comprenant :
- un bâti (3) comportant un premier support (4) latéral et un deuxième support (5) latéral définissant entre eux une zone (6) d'accueil,
- une pluralité de modules (7) agencés dans la zone (6) d'accueil, chaque module (7) ayant une première armature (8) et une deuxième armature (9), batterie (2) dans laquelle la première armature (8) et la deuxième armature (9) s'étendent du premier support (4) latéral jusqu'au deuxième support (5) latéral et dans laquelle la première armature (8) et la deuxième armature (9) sont chacune fixées au premier support (4) latéral et au deuxième support (5) latéral
batterie (2) dans laquelle, à l'intérieur d'un module (7) donné, les cellules (18) sont connectées électriquement entre elles au moyen de dispositifs (19) de connexion rigides, la première armature (8) et la deuxième armature (9) étant fixées aux dispositifs (19) de connexion.

2. Batterie (2) secondaire selon la revendication 1 dans laquelle, deux modules (7) immédiatement voisins sont en contact l'un avec l'autre ou sont espacés l'un de l'autre par un espace de séparation, ledit espace de séparation étant vide.

3. Batterie (2) secondaire selon l'une quelconque des revendications précédentes dans laquelle, le premier support (4) latéral et le deuxième support (5) latéral s'étendent selon un axe (X) longitudinal et les armatures (8, 9) s'étendent selon un premier axe (Y) transversal perpendiculaire à l'axe (X) longitudinal.

4. Batterie (2) secondaire selon la revendication 3 dans lequel, les armatures (8, 9) sont des profilés ayant une section en forme de C.

5. Batterie (2) secondaire selon la revendication 4 dans lequel, chaque armature (8, 9) présente en section une paroi (12) centrale s'étendant selon un deuxième axe (Z) transversal perpendiculaire à l'axe (X) longitudinal et au premier axe (Y) transversal, deux parois (13) latérales s'étendant selon l'axe (X) longitudinal et définissant un angle sensiblement droit avec la paroi (12) centrale, et deux parois (14) d'extrémité chacune prolongeant une paroi (13) latérale, lesdites parois (14) d'extrémités étant orientées en direction l'une de l'autre.

6. Batterie (2) secondaire selon l'une quelconque des revendications 3 à 5 dans laquelle, chaque armature (8, 9) comporte à chacune d'extrémités (16), une platine (15) de fixation destinée à être solidarisée aux supports (4, 5) latéraux.

7. Batterie (2) secondaire selon la revendication 6 dans laquelle, chaque armature (8, 9) comprend deux platines (15) de fixation, une seule platine (15) de fixation à chacune des extrémités (16).

8. Batterie (2) secondaire selon la revendication 7 dépendante en outre de la revendication 5 dans laquelle, sur chaque armature (8, 9), les platines (15) de fixation prolongent, selon le premier axe (Y) transversal, une seule et même paroi (13) latérale.

9. Batterie (2) secondaire selon la revendication 8 dans laquelle, la platine (15) de fixation fait saillie du profilé selon le premier axe (Y) transversal.

10. Batterie (2) secondaire selon l'une quelconque des revendications 3 à 9 dans laquelle, chaque module (7) comprend plusieurs paires (17) de cellules (18) électrochimiques secondaires en sachet.

11. Batterie (2) secondaire selon la revendication 10 dans laquelle, les paires (17) de cellules (18) sont agencées les unes à côté des autres selon l'axe (X) longitudinal.

12. Batterie (2) secondaire selon la revendication 11 dans laquelle, chaque paire (17) comporte deux cellules (18) électrochimiques en sachet, lesdites cellules (18) d'une même paire (17) s'étendant selon le premier axe (Y) transversal dans le prolongement l'une de l'autre.

13. Batterie (2) secondaire selon l'une quelconque des revendications précédentes dans laquelle, la première armature (8) et la deuxième armature (9) sont chacune fabriquées d'un seul tenant.

14. Batterie (2) secondaire selon l'une quelconque de revendications précédentes dans laquelle, celle-ci comprend des armatures (20, 21) d'extrémité agencées sensiblement perpendiculaires aux premier support (4) latéral et deuxième support (5) latéral, les armature (20, 21) d'extrémité fermant la zone d'accueil longitudinalement.

15. Batterie (2) secondaire selon l'une quelconque des revendications précédentes dans laquelle, la première armature (8) et la deuxième armature (9) sont chacune continues.

## Patentansprüche

1. Akkumulator (2), umfassend:
- ein tragendes Element (3), das eine erste seitliche Halterung (4) und eine zweite seitliche Halterung (5) aufweist, die dazwischen eine Aufnahmezone (6) definieren,
- eine Vielzahl von Modulen (7), die in der Aufnahmezone (6) angeordnet sind, wobei jedes Modul (7) einen ersten Rahmen (8) und einen zweiten Rahmen (9) besitzt, wobei sich in dem Akku (2) der erste Rahmen (8) und der zweite Rahmen (9) von der ersten seitlichen Halterung (4) bis zu der zweiten seitlichen Halterung (5) erstrecken und der erste Rahmen (8) und der zweite Rahmen (9) jeweils an der ersten seitlichen Halterung (4) und an der zweiten seitlichen Halterung (5) befestigt sind,
wobei in dem Akku (2) innerhalb eines gegebenen Moduls (7) die Zellen (18) mittels starrer Verbindungsvorrichtungen (19) elektrisch miteinander verbunden sind, wobei der erste Rahmen (8) und der zweite Rahmen (9) an den Verbindungsvorrichtungen (19) befestigt sind.

2. Akkumulator (2) nach Anspruch 1, wobei zwei unmittelbar benachbarte Module (7) miteinander in Kontakt stehen oder durch einen Trennraum voneinander beabstandet sind, wobei der Trennraum leer ist.

3. Akkumulator (2) nach einem der vorstehenden Ansprüche, wobei sich die erste seitliche Halterung (4) und die zweite seitliche Halterung (5) entlang einer Längsachse (X) erstrecken und sich die Rahmen (8, 9) entlang einer ersten Querachse (Y) senkrecht zu der Längsachse (X) erstrecken.

4. Akkumulator (2) nach Anspruch 3, wobei die Rahmen (8, 9) Profile sind, die einen C-förmigen Querschnitt besitzen.

5. Akkumulator (2) nach Anspruch 4, wobei jeder Rahmen (8, 9) im Querschnitt eine zentrale Wand (12), die sich entlang einer zweiten Querachse (Z) senkrecht zu der Längsachse (X) und zu der ersten Querachse (Y) erstreckt, zwei seitliche Wände (13), die sich entlang der Längsachse (X) erstrecken und einen im Wesentlichen rechten Winkel mit der zentralen Wand (12) ausbilden, und zwei Endwände (14) vorweist, die jeweils eine seitliche Wand (13) verlängern, wobei die Endwände (14) einander zugewandt sind.

6. Akkumulator (2) nach einem der Ansprüche 3 bis 5, wobei jeder Rahmen (8, 9) an jedem seiner Enden (16) eine Befestigungsplatte (15) aufweist, die dazu bestimmt ist, mit den seitlichen Halterungen (4, 5) fest verbunden zu werden.

7. Akkumulator (2) nach Anspruch 6, wobei jeder Rahmen (8, 9) zwei Befestigungsplatinen (15), eine einzelne Befestigungsplatine (15) an jedem der Enden (16) umfasst.

8. Akkumulator (2) nach Anspruch 7, der ferner von Anspruch 5 abhängt, wobei an jedem Rahmen (8, 9) die Befestigungsplatinen (15) entlang der ersten Querachse (Y) ein und dieselbe Seitenwand (13) verlängern.

9. Akkumulator (2) nach Anspruch 8, wobei die Befestigungsplatine (15) aus dem Profil entlang der ersten Querachse (Y) hervorsteht.

10. Akkumulator (2) nach einem der Ansprüche 3 bis 9, wobei jedes Modul (7) mehrere Paare (17) von sekundären elektrochemischen Pouch-Zellen (18) umfasst.

11. Akkumulator (2) nach Anspruch 10, wobei die Paare (17) von Zellen (18) nebeneinander entlang der Längsachse (X) angeordnet sind.

12. Akkumulator (2) nach Anspruch 11, wobei jedes Paar (17) zwei elektrochemische Pouch-Zellen (18) umfasst, wobei sich die Zellen (18) eines gleichen Paares (17) entlang der ersten Querachse (Y) in der Verlängerung voneinander erstrecken.

13. Akkumulator (2) nach einem der vorstehenden Ansprüche, wobei der erste Rahmen (8) und der zweite Rahmen (9) jeweils einstückig hergestellt sind.

14. Akkumulator (2) nach einem der vorstehenden Ansprüche, wobei dieser Endrahmen (20, 21) umfasst, die im Wesentlichen senkrecht zu der ersten seitlichen Halterung (4) und der zweiten seitlichen Halterung (5) angeordnet sind, wobei die Endrahmen (20, 21) die Aufnahmezone in Längsrichtung verschließen.

15. Akkumulator (2) nach einem der vorstehenden Ansprüche, wobei der erste Rahmen (8) und der zweite Rahmen (9) jeweils durchgehend sind.

## Claims

1. Secondary battery (2) comprising:
- a frame (3) having a first side support (4) and a second side support (5) defining a receiving zone (6) therebetween,
- a plurality of modules (7) arranged in the receiving zone (6), each module (7) having a first framework (8) and a second framework (9), in which battery (2) the first framework (8) and the second framework (9) extend from the first side support (4) to the second side support (5) and in which the first framework (8) and the second framework (9) are each attached to the first side support (4) and to the second side support (5),
in which battery (2), within a given module (7), the cells (18) are electrically connected to one another by means of rigid connection devices (19), the first framework (8) and the second framework (9) being attached to the connection devices (19).

2. Secondary battery (2) according to claim 1, wherein two immediately adjacent modules (7) are in contact with one another or are spaced apart by a separating space, said separating space being empty.

3. Secondary battery (2) according to any of the preceding claims, wherein the first side support (4) and the second side support (5) extend along a longitudinal axis (X) and the frameworks (8, 9) extend along a first transverse axis (Y) perpendicular to the longitudinal axis (X).

4. Secondary battery (2) according to claim 3, wherein the frameworks (8, 9) are profiles having a C-shaped cross-section.

5. Secondary battery (2) according to claim 4, wherein each framework (8, 9) has, in cross-section, a central wall (12) extending along a second transverse axis (Z) perpendicular to the longitudinal axis (X) and to the first transverse axis (Y), two side walls (13) extending along the longitudinal axis (X) and defining a substantially right angle with the central wall (12), and two end walls (14) each extending a side wall (13), said end walls (14) being oriented toward each other.

6. Secondary battery (2) according to any of claims 3 to 5, wherein each framework (8, 9) comprises, at each end (16), an attachment plate (15) intended to be rigidly connected to the side supports (4, 5).

7. Secondary battery (2) according to claim 6, wherein each framework (8, 9) comprises two attachment plates (15), namely a single attachment plate (15) at each end (16).

8. Secondary battery (2) according to claim 7 when also further dependent on claim 5, wherein, on each framework (8, 9), the attachment plates (15) extend, along the first transverse axis (Y), a single side wall (13).

9. Secondary battery (2) according to claim 8, wherein the attachment plate (15) projects from the profile along the first transverse axis (Y).

10. Secondary battery (2) according to any of claims 3 to 9, wherein each module (7) comprises a plurality of pairs (17) of secondary electrochemical pouch cells (18).

11. Secondary battery (2) according to claim 10, wherein the pairs (17) of cells (18) are arranged next to one another along the longitudinal axis (X).

12. Secondary battery (2) according to claim 11, wherein each pair (17) comprises two electrochemical pouch cells (18), said cells (18) of the same pair (17) extending along the first transverse axis (Y) in line with one another.

13. Secondary battery (2) according to any of the preceding claims, wherein the first framework (8) and the second framework (9) are each manufactured in a single piece.

14. Secondary battery (2) according to any of the preceding claims, wherein said battery comprises end frameworks (20, 21) arranged substantially perpendicular to the first side support (4) and the second side support (5), the end frameworks (20, 21) closing the receiving zone longitudinally.

15. Secondary battery (2) according to any of the preceding claims, wherein the first framework (8) and the second framework (9) are each continuous.
